# EUROPEAN PATENT APPLICATION

(11) **EP 2 634 001 A1**
(43) Date of publication of application: **04.09.2013**
(21) Application number: 11835639.3
(22) Date of filing: 27.10.2011
(51) Int. Cl.: B41J 3/01, G06K 9/03

(54) **A DEVICE FOR PRINTING BAR CODE OF VARIABLE DATA AND THE MOTHEOD THERE OF**

(30) Priority: 29.10.2010 CN 201010531977
(71) Applicant: Peking University Founder Group Co., Ltd, Haidian District Beijing 100871 (CN); Peking University, Beijing 100871 (CN); Beijing Founder Electronics Co., Ltd., Haidian District, Beijing 100085 (CN)
(72) Inventor: LIU, Xiaowei, Beijing 100085 (CN); LIU, Zhihong, Beijing 100085 (CN)
(74) Representative: Haley, Stephen
(86) International application number: PCT/CN2011/081417
(87) International publication number: WO 2012/055366

(57) **Abstract**

The application discloses a method and an apparatus for printing a variable data barcode. The method comprises a step of printing a variable data barcode corresponding to a first barcode on a medium by an inkjet printing device (S10), a step of transferring the medium via a transmission means to a detecting region (S20), a step of scanning the variable data barcode on the medium in the detecting region to obtain a second barcode by an online detecting device (S30); and a step of comparing the first barcode to the second barcode. If they do not match, an alarm is issued (S40). The present application can improve the printing pass rate of the variable data barcode.

## Description

### Technical Field

The present application relates to a field of printing, in particular, to a method and an apparatus for printing a barcode with variable data (hereinafter, variable data code).

### Background

The inkjet digital printing technology has been rapidly developed in recent years. It handles the data directly and then jets ink to print. With this property, a variable data can be easily and readily printed. Therefore, the inkjet digital printing has advantages and speed which the traditional printing cannot reach. A variable barcode code printing, which is capable of printing a unique barcode on each product, is a very prominent application of the technology (such as an electronic monitoring code on a packaging box of the food and drug).

This application has high demands on the quality and safety of the variable data barcode: 1) each qualified product must be printed with the barcode; 2) the barcode printed on each qualified product must be the required barcode; 3) the barcode printed on each qualified product must be unique and cannot be the same as the other barcodes on the other qualified products.

The inventor has found that the quality of the printed matter is usually detected after the variable data barcode is printed in the prior art. Since the detecting is not a real-time detecting in the prior art, printing errors cannot be prevented in time and thus a large number of defective products may be produced.

### Summary

The present application intents to provide a method and an apparatus for printing a variable data barcode, which may solve the above mentioned quality detecting problem in the variable data barcode printing.

According one embodiment of the present application, a method for printing a variable data barcode is provided. The method comprises a step of printing a variable data barcode corresponding to a first barcode on a medium (such as paper) by an inkjet printing device, a step of transferring the medium via a transmission means to a detecting region; a step of scanning the variable data barcode on the medium in the detecting region to obtain a second barcode by an online detecting device; and a step of comparing the first barcode with the second barcode. If the first barcode does not march with the second barcode, the method further comprises a step of issuing an alarm.

According another embodiment of the present application, an apparatus for printing a variable data barcode is provided. The apparatus comprises an inkjet printing device configured to print a variable data barcode corresponding to a first barcode on a medium. Furthermore, the apparatus comprises a transmission device configure to transfer the medium to a detecting region. Additionally, the apparatus comprises an online detecting device configured to scan the variable data barcode on the medium in the detecting region to obtain a second barcode and a first determining module configured to compare the first barcode to the second barcode. If the first barcode does not march with the second barcode, the first determining module issues an alarm.

The method and the apparatus for printing a variable data barcode according to the embodiment of the present applicant use the online detecting device to detect the variable data barcode online so as to address the issue in regard to the higher defective rate in the prior art and thus improve a printing pass rate of the variable data barcode.

### Brief Description of the Drawing

The drawings described herein are used to provide a further understanding to the present application and constitute a part of this specification. Exemplary embodiments of the present application and their descriptions serve to explain the present application and do not constitute improper limitation on the present application. In the drawings:

Fig. 1 is a flowchart illustrating a method for printing a variable data barcode according to an embodiment of the present application;

Fig. 2 is a schematic diagram of a database according to a preferable embodiment of the present application;

Fig. 3 is a flowchart illustrating a method for printing a variable data barcode according to a preferable embodiment of the present application;

Fig.4 is a schematic diagram illustrating an apparatus for printing a variable data barcode according to an embodiment of the present application; and

Fig. 5 is a schematic diagram illustrating an apparatus for printing a variable data barcode according to a preferable embodiment of the present application.

### Detailed Description

Hereinafter, the present application will be explained in detail with reference to the accompanying drawings in connection with the embodiments.

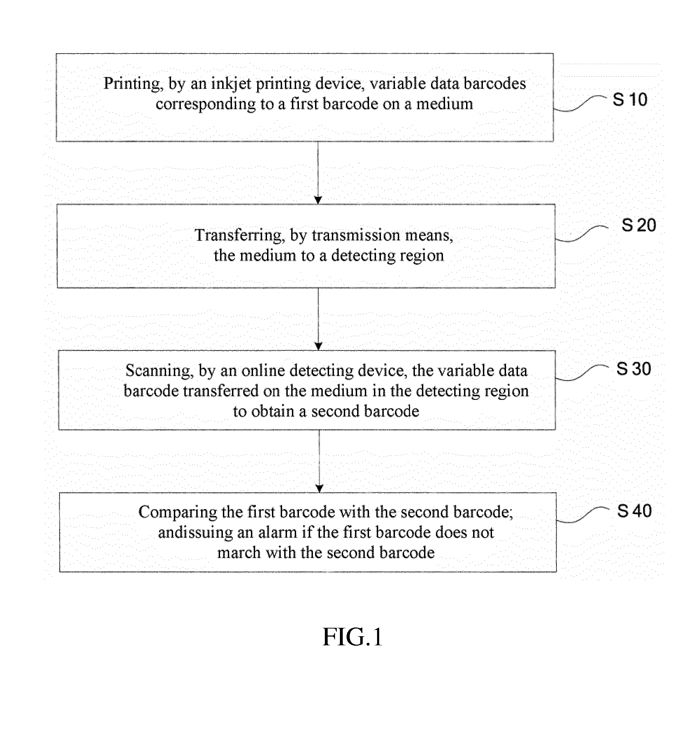

Fig. 1 is a flowchart illustrating a method for printing a variable data barcode according to an embodiment of the present application. The method may comprise:
step S10, in which an inkjet printing device operates to print variable data barcodes corresponding to the first barcodes on a medium;
step S20, in which the medium is transferred by a transmission means to a detecting region;
step S30, in which an online detecting device scans the variable data barcode on the medium transferred into the detecting region to obtain a second barcode; and
step S40, in which the first barcode will be compared with the second barcode, and an alarm will be issued if they do not match.

The printing method uses the online detecting device to detect the variable data barcode online to avoid the higher defective rate in the prior art due to the non-real-time detecting, and thus obtain a qualified rate for printing a variable data barcode. In addition, in the conventional detecting process, the apparatus will be shut down when it detects a defective product, which results in a reduced production efficiency. But according to the embodiment of the present application, the apparatus issues an alarm rather than directly shuts down when it detects a defective product, and thus the production efficiency will be improved.

Preferably, the method for printing a variable data barcode further comprises at least one of the following steps:
a step of determining whether the number of the second barcode is less than a preset value, if yes, alarming that there is a vacant barcode in the variable data barcodes;
a step of determining whether the second barcode is in a first database, if not, alarming that there is an error barcode in the variable data barcodes, wherein the first database includes all the first barcode required to print; and
a step of determining whether the second barcode is in a second database, if yes, alarming that there is a repeated barcode in the variable data barcodes and displaying identifications of the two media with the repeated barcode when alarming, wherein the second database includes all the printed first barcode.

The first database and the second database are provided in the preferable embodiment. The first database is arranged to save all the barcodes required to print. When the detected second barcode is not in the first database, the variable data barcode is apparently an error barcode. The second database is arranged to save all the historical data that has been printed. When the detected second barcode is in the second database, the variable data barcode is apparently a repeated barcode.

Additionally, the barcodes usually have a fixed number (for example, three variable data barcodes should be printed on each medium). It can be determined whether there is a vacant barcode by determining whether the number of the second barcode reaches the fixed number, i.e. 3.

The vacant barcodes, repeated barcodes or error barcodes are not allowable. In the preferable embodiment, the defective product can be detected in time by detecting these three situations. The online detecting device detects immediately the quality of the barcode after the inkjet printing. If it is found that the printed barcode do not meet these three requirements, the apparatus alarms immediately to inform the printing factory to respond timely. In addition, the apparatus may not be shut down immediately in the specific process, in order to effectively guarantee the efficiency in the production of printing factories.

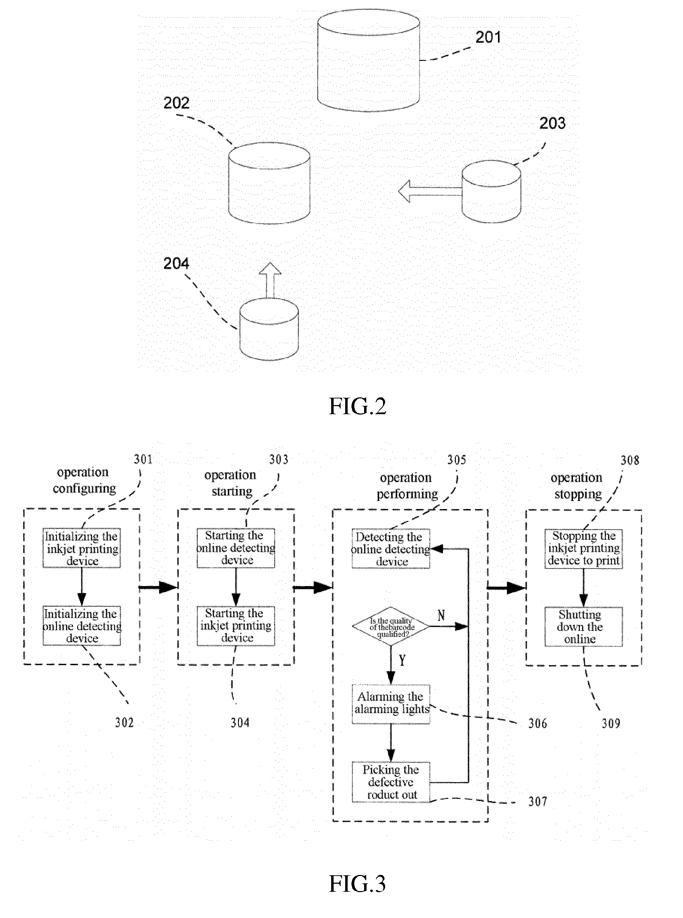

Fig. 2 is a schematic diagram of a database according to a preferable embodiment of the present application. As shown, a database 201 is arranged to include all the barcodes required to print on the products, i.e. the first database, and the online detecting device and the inkjet printing device both use the database 201. Data 203 is the first barcode which is printed on the closest product (medium) by the inkjet printing device. Data 204 is the second barcode on the latest product (medium) which is scanned by the online detecting device. A database 202 is arranged to include all the historical data scanned by the online detecting device and is saved in the online detecting device, i.e. the second database.

Preferably, the method comprises a further step in which the online detecting device obtains the first barcode via Ethernet from the inkjet printing device. The Ethernet has been widely used for data transmission by connecting various switches and network cables, or wireless device etc. Therefore, the preferable embodiment can be achieved simply and cost lowly.

Preferably, the method further comprises a step of detecting whether the medium enters the detecting region via a first photoelectric switch, if yes, the online detecting device scans the variable data barcode on the medium to obtain the second barcode; and a step of detecting whether the medium leaves the detecting region via a second photoelectric switch, if yes, the step of scanning will stop. It can be determined that whether the medium is in the appropriate detecting region via the photoelectric switches, thereby the online detecting device may be correctly triggered to scan so as to reduce missed and false detection.

Preferably, the method further comprises a step of displaying the identification of the medium when alarm is issued. If the vacant barcode, repeated barcode or error barcode is detected, the identifications (such as page number) of the products corresponding to these defective barcodes are displayed. In this regard, the defective product can be easily picked out according to these identifications, without reducing the production efficiency.

Fig. 3 is a flowchart illustrating a method for printing a variable data barcode according to a preferable embodiment of the present application. The method comprises 4 stages: operation configuring, operation starting, operation performing and operation stopping.

(1) The operation configuring stage comprises two steps, i.e. step 301 of initializing the inkjet printing device and step 302 of initializing the online detecting device.

In step 301, the barcodes (they may be text data *txt,* but also may be data in other formats) required to print are loaded into a control software of the inkjet printing device before the inkjet printing. In order to ensure the security of the barcodes, the control software checks whether there is a repeated barcode in the loaded barcodes, if yes, the loading is immediately stopped and an alarm is issued. If there is no repeated barcode in the loaded barcodes, a unique identification (page number) is generated for the barcode on each product for the online detecting device to use.

In step 302, the online detecting device is initialized, which may be performed after the step 301. In step 302, the online detecting device and the inkjet printing device communicate with each other via Ethernet. Both the number of used spray heads for printing and the number of the barcode printed by each spray head may be known, and thus a configuration of the required online detecting device (for example, an industrial barcode scanning gun implemented as the online detecting device, and the number of the industrial barcode scanning gun) and the number of the barcodes to be scanned by each scanning gun can be determined accordingly. And then the information is configured into the corresponding industrial barcode scanning gun.

Meanwhile, the online detecting device can know the identification (page number) corresponding to each variable barcode via Ethernet, and then use these information to configure the control software of the online detecting device so that the defective product will be picked out in case that the alarming is issued.

(2) The operation starting stage comprises two steps, i.e. a step 303 of starting the online detecting device and a step 304 of starting the inkjet printing device.

After the above mentioned configuring is done, the operation starting stage will begin. In step 303, the online detecting device is activated first, and the starting process is controlled by the control software of the inkjet printing device. Meanwhile, green segments of alarming lights (alarming device) 101 in Fig. 1 are turned on to indicate that the online detecting device is operating.

In step 304, the inkjet printing device starts to print the barcode after the step 303 is completed.

The sequence of the two steps 303 and 304 should cooperate under the controls of the control software. Otherwise, the barcodes are started to be printed, but the online detecting device is not activated, resulting in that the printed barcodes cannot be detected in time, and thus will cause the potential quality issues for the final products.

(3) The operation performing stage comprises three parts, i.e. a step 305 of detecting the online detecting device, a step 306 of alarming the alarming lights and a step 307 of picking the defective product out.

The operation performing stage begins after the operation starting stage is done. The inkjet printing device starts to print the barcodes, while the online detecting device starts to detect. During the detecting process, the online detecting device obtains the scanned barcode from the industrial barcode scanning gun in real time and also obtains the printed barcode from the inkjet printing device in real time. Then the online detecting device compares the scanned barcode with the printed barcode. If there is any vacant barcode, error barcode or repeated barcode, the apparatus issue an alarm via lights and buzzers.

Meanwhile, the online detecting device also displays the identification (page number) corresponding to the current defective product. As long as one barcode on the product can be correctly detected, the identification (page number) of the product can be determined. Therefore, the vacant, error or repeated barcode on the product may be used to display the identification of the product. Furthermore, for the repeated barcode, the identification (page number) of the medium where the repeated barcode is detected for the first time can be displayed.

If there is no barcode on the product (medium) or all the barcodes on the product cannot be correctly detected, there is a vacant barcode on the product (medium) and the identification (page number) of the product is marked as *"N+M",* where N is the identification (page number) for the closest product of the all identified products, M is the number of times that the barcode cannot be correctly detected (i.e. continuous M products cannot be correctly detected after a product is correctly detected) and M increases from 0 sequentially. Once the identification of the product can be correctly detected, the value of *M* is cleared.

In this way, each product has a unique identification, and thus it is very simple to detect the defective product. Furthermore, if there is a defective product, the apparatus does not need to be shut down immediately, which effectively ensures the production efficiency.

(4) The operation stopping stage comprises two parts, i.e. a step 308 of stopping the inkjet printing device to print the barcode and a step 309 of shutting down the online detecting device.

When all the barcodes are printed, the printing is stopped first and then the online detecting device is shut down. The sequence of this stage is opposite to that of the operation starting stage.

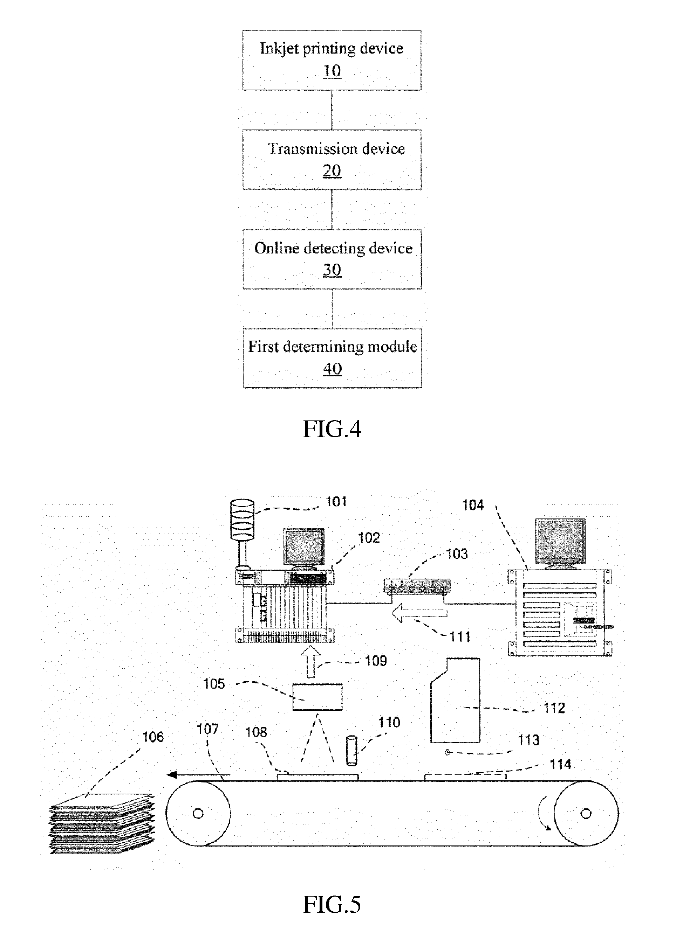

Fig.4 is a schematic diagram illustrating an apparatus for printing a variable data barcode according to an embodiment of the present application, the apparatus comprises:
an inkjet printing device 10 configured to print a variable data barcode corresponding to a first barcode on a medium;
a transmission device 20 configured to transfer the medium to a detecting region;
an online detecting device 30 configured to scan the variable data barcode on the medium in the detecting region to obtain a second barcode; and
a first determining module 40 configured to determine if the first barcode matches with the second barcode, if not, the module 40 issue an alarm.

The online detecting device of the apparatus detects the variable data barcode online in order to overcome a higher defective rate due to the non-real-time detecting in the prior art, so that a qualified rate for printing a variable data barcode is improved.

Preferably, the apparatus further comprises at least one of the following modules:
a second determining module configured to determine whether or not the number of the second barcode is less than a preset value, if yes, the second determining module issue the alarm indicating that there is a vacant barcode in the variable data barcodes;
a third determining module configured to determine whether or not the second barcode is in a first database, if not, the third determining module issues the alarm indicating that there is an error barcode in the variable data barcodes, wherein the first database includes all the first barcode required to print;
a fourth determining module configured to determine whether or not the second barcode is in a second database, if yes, the fourth determining module issues the alarm indicating that there is a repeated barcode in the variable data barcodes and displays identifications of the two media with the repeated barcode when the alarm is issued, wherein the second database includes all the printed first barcode.

The vacant, repeated and error barcodes are not allowable, and thus in the preferable embodiment, the defective products are detected in time by detecting these three situations.

Preferably, the apparatus further comprises Ethernet configured to transfer the first barcode from the inkjet printing device to the online detecting device.

Preferably, the apparatus further comprises a first photoelectric switch configured to detect whether the medium enters into the detecting region and a second photoelectric switch configured to detects whether the medium leaves the detecting region. It can be determined that whether the medium is in the appropriate detecting region via the photoelectric switches, thereby the online detecting device can be correctly triggered to scan so as to reduce the missed and false detection.

Preferably, the apparatus further comprises a display configured to display the identification of the medium when alarming. If the vacant, repeated or error barcode is detected, the identifications (such as page number) of the products with these defective barcodes are displayed. In this regard, the defective product can be easily picked out according to these identifications in the printing factories, without reducing the production efficiency.

Fig. 5 is a schematic diagram illustrating an apparatus for printing a variable data barcode according to a preferable embodiment of the present application. The apparatus comprises an industrial alarming light (i.e. alarming device) 101 configured to include green, red and yellow segments and buzzer, an online detecting device 102 configured to include: an industrial barcode scanning gun 105 and its cable 109, and a display configured to display related information, Ethernet 103 configured to connect the inkjet printing device and the online detecting device, the inkjet printing device 104, the printed product 106, a belt (i.e. a transmission device) configured to move from right to left along with the products (medium) which are gripped via air draft, the products 108 located in the online detecting region, photoelectric switches 110 of the online detecting device, a spray head 112 controlled by the printing device, an ink-drop 113 sprayed by the spray head, the products 114 located in the inkjet printing region, the barcode 113 scanned by the industrial barcode scanning gun and then transmitted to the online detecting device, and the barcode 114 printed by the inkjet printing device.

As shown in Fig. 5, the medium 114 is located on the belt 107 and moves along with the belt from right to left. When the medium 114 arrives at the printing region, the spray head 112 sprays the ink-drops 113 under the control of the inkjet printing device 104, and the ink-drops fall down on the medium 114 to form the barcode. Then, the printed medium continues to move to the left to reach the location 108. The online detecting device detects that the product enters into the detecting region via the photoelectric switches 110, and then the industrial barcode scanning gun 105 scans the barcode and transfers the scanned data 109 into the online detecting device 102. At the same time, the online detecting device 102 obtains the printed barcode 111 from the inkjet printing device 104 via the Ethernet. When the photoelectric switches 109 detect that the medium leaves the detecting region, it is considered that the scanning of the barcode is completed. Then, the apparatus compares the printed data with the scanned data in order to detect whether the quality of the barcode which is just printed is qualified. If not, the apparatus alarms immediately via alarming lights and buzzers.

Through the above steps, the apparatus checks the barcode 204 obtained for each scanning. If there is a vacant or error barcode, the yellow segment of the alarming light turns on while the buzzer alarms. If there is a repeated barcode, the red segment of the alarming light turns on while the buzzer alarms a longer time in order to prompt user to process in time.

When the online detecting device detects that there is a quality problem of the barcode, the apparatus alarms to prompt rather than to be shut down immediately, which otherwise will reduce the production efficiency.

Before the inkjet printing device prints, the apparatus generates the unique identification (page number) for the variable data barcode to be printed on each product, and the identification increases sequentially. Then the identification is printed on the non-product region of the medium. Meanwhile, the identification is transferred to the online detecting device via Ethernet. If the vacant, repeated or error barcode is detected, the identifications (page number) of the products with these defective barcodes will be displayed. In this regard, the defective product can be easily picked out according to these identifications in the printing factories, without reducing the production efficiency.

In addition, there is no limit in the number of industrial barcode scanning gun according to the present invention. In order to increase the number of the scanning gun, there is a need to simply initialize the software to add the scanning gun into the online detecting system.

In view of the above, the printing pass rate of the variable data barcode is increased according to the embodiments of the present invention.

It will be readily apparent to those skilled in the art that the modules or steps of the present application may be implemented with a common computing device. In addition, the modules or steps of the present application can be concentrated or run in a single computing device or distributed in a network composed of multiple computing devices. Optionally, the modules or steps may be achieved by using codes of the executable program, so that they can be stored in the storage medium, or the plurality of the modules or steps can be fabricated into an individual integrated circuit module. Therefore, the present application is not limited to any particular hardware, software or combination thereof.

The foregoing is only preferred embodiments of the present application, and it is not intended to limit the present application. Moreover, it will be apparent to those skilled in the art that various modifications and variations can be made to the present application. Thus, any modifications, equivalent substitutions, improvements etc. within the spirit and principle of the present application should be included within the scope of protection of the application.

## Claims

1. A method for printing a variable data barcode, comprising:
printing, by an inkjet printing device, variable data barcodes corresponding to a first barcode on a medium;
transferring, by transmission means, the medium to a detecting region;
scanning, by an online detecting device, the variable data barcode transferred on the medium in the detecting region to obtain a second barcode;
comparing the first barcode with the second barcode; and
issuing an alarm if the first barcode does not march with the second barcode.

2. The method according to claim 1, further comprising at least one of the following steps:
determining whether or not the number of the second barcode is less than a preset value, and issuing the alarm to indicate that there is a vacant barcode in the at least one variable data barcode if the number is less than the preset value;
determining whether or not the second barcode is in a first database, and issuing the alarm to indicate that there is an error barcode in the variable data barcodes if the second barcode is not in a first database, wherein the first database includes all the first barcodes required to print; and
determining whether or not the second barcode is in a second database, and issuing the alarm to indicate that there is a repeated barcode in the variable data barcodes and displaying identifications of the two media with the repeated barcode when alarming if the second barcode is in the second database, wherein the second database includes all the printed first barcodes.

3. The method according to claim 1, further comprising:
obtaining, by the online detecting device, the first barcode via Ethernet from the inkjet printing device.

4. The method according to claim 1, further comprising:
detecting, by a first photoelectric switch, whether or not the medium enters into the detecting region, if yes,
scanning, by the online detecting device, the variable data barcode on the medium to obtain the second barcode; and
detecting, by a second photoelectric switch, whether or not the medium leaves the detecting region, if yes, stopping the step of scanning.

5. The method according to claim 1, further comprising:
displaying the identification of the medium when alarming.

6. An apparatus for printing a variable data barcode, comprising:
an inkjet printing device configured to print a variable data barcode corresponding to a first barcode on a medium;
a transmission device configured to transfer the medium to a detecting region;
an online detecting device configured to scan the variable data barcode on the medium in the detecting region to obtain a second barcode; and
a first determining module configured to compare the first barcode with the second barcode to determine if the first barcode marches with the second barcode, if yes, the first determining module issue an alarm.

7. The apparatus according to claim 6, further comprising at least one of the following modules:
a second determining module configured to determine whether or not the number of the second barcode is less than a preset value, if yes, the second determining module issues the alarm to indicate that there is a vacant barcode in the variable data barcodes;
a third determining module configured to determine whether or not the second barcode is in a first database, if not, the third determining module issues the alarm to indicate that there is an error barcode in the variable data barcodes, wherein the first database includes all the first barcodes required to print;
a fourth determining module configured to determine whether or not the second barcode is in a second database, if yes, the fourth determining module issues the alarm to indicate that there is a repeated barcode in the variable data barcodes and displays identifications of the two media with the repeated barcode when alarms, wherein the second database includes all the printed first barcodes.

8. The apparatus according to claim 6, further comprising:
Ethernet configured to transfer the first barcode from the inkjet printing device to the online detecting device.

9. The apparatus according to claim 6, further comprising:
a first photoelectric switch configured to detect whether or not the medium enters into the detecting region; and
a second photoelectric switch configured to detects whether or not the medium leaves the detecting region.

10. The apparatus according to claim 6, further comprising:
a display configured to display the identification of the medium when alarming.
